# EUROPEAN PATENT APPLICATION

(11) **EP 2 572 865 A1**
(43) Date of publication of application: **27.03.2013**
(21) Application number: 12184241.3
(22) Date of filing: 13.09.2012
(51) Int. Cl.: B29C 67/00

(54) **Three-dimensional shaping apparatus**

(30) Priority: 20.09.2011 JP 2011205104
(71) Applicant: Keyence Corporation, Osaka-shi, Osaka 533-8555 (JP)
(72) Inventor: Nehashi, Kazuma, Osaka (JP)
(74) Representative: HOFFMANN EITLE

(57) **Abstract**

A three-dimensional shaping apparatus suppressing the effect of individual differences or deterioration of a light source is configured to irradiate light onto a shaping material ejected onto a shaping stage, and enable irradiation of light at a suitable illuminance onto the shaping material. The apparatus includes a shaping material nozzle, a UV lamp 351, a head unit 111 configured to retain the UV lamp 351 and the shaping material nozzle, and a scanning device configured perform a two dimensional scan of the head unit 111 parallel to the shaping stage 112. The three-dimensional shaping apparatus 10 includes an illuminance sensor 60 provided at a position enabling receipt of light generated by the UV lamp 351, and a light intensity correction device 207 configured to correct the light intensity of the UV lamp 351 based on the illuminance detected by the illuminance sensor 60.

## Description

### BACKGROUND OF THE INVENTION

### 1. Field of the Invention

The present invention relates to a three-dimensional shaping apparatus, and more particularly, relates to improvements to a three-dimensional shaping apparatus in which a shaping material layer is formed from shaping material that is ejected and cured on a shaping stage, and such layers are successively formed and subjected to lamination shaping.

### 2. Description of Related Art

Recently, manufacture of a stereoscopic shaped object has been simplified by use of a lamination shaping method. A lamination shaping method is a shaping method that forms a thin plate having the same two-dimensional shape as that of each layer when dividing an object to be shaped into a plurality of thin layers, and laminates the thin plates to thereby manufacture a stereoscopic shaped object. The method is used for rapid prototyping. These laminate shaping methods include an optical shaping method, a powder bonding method, a sheet deposition and lamination method, a resin extrusion method, and inkjet method, and the like. (For example, Patent Literature 1).

An inkjet shaping method is a shaping method that uses a technique associated with an inkjet printer, uses a photocurable shaping material such as an ultraviolet (UV) curing resin or the like in substitution for ink, ejects the shaping material from a nozzle, and irradiates UV light onto the shaping material deposited onto a shaping stage to thereby harden. In this shaping method, a slice layer constituted from shaping material is formed by performing two-dimensional scanning of shaping material nozzles having a plurality of ejection ports aligned in a substantially linear configuration to eject shaping material in parallel to the shaping stage and to thereby form a stereoscopic shaped object by successively laminating and forming the slice layers.

In an inkjet shaping apparatus, a model material configured to form the shaped object itself, and a supporting material that is configured to support an overhang portion or isolated portion of the model material and that is finally removed. Furthermore, a UV lamp configured to emit ultraviolet light is disposed in a head unit at a different position in a scanning direction relative to the shaping material nozzle. Normally, shaping material is ejected and deposited in the main scanning forward and rearward paths during two-dimensional scanning, and is cured by irradiation with UV light in the main scanning rearward path.

Patent Document 1: Japanese Unexamined Patent Publication No. 2004-90530

### SUMMARY OF THE INVENTION

Generally, the shaping material that is deposited onto the shaping stage must be irradiated with UV light with a suitable illuminance in response to the scanning speed during main scanning, the thickness of the slice layer, or the type of UV curing resin. For example, when the illuminance is too high, the heat amount will increase and warping will be caused in the shaped object. On the other hand, when the illuminance is too low, sufficient curing of the shaped object will not occur and therefore there is the disadvantage that the surface of the shaped object will be sticky. In particular, when the illuminance is low, the model material and the support material will mix at the boundary region of contact between both materials, and therefore removal of the supporting material will be difficult.

When the shaped object has a large height with respect to the direction of lamination, if the light amount that is irradiated from a horizontal direction is insufficient, stickiness or sagging will result on the side surface of the shaped object.

However, the light intensity of the UV lamp is gradually reduced over time. Furthermore, there are individual differences in the temporal deterioration or the initial value of the light intensity of the UV lamp. As a result, when the UV lamp is exchanged, the desired illuminance cannot be obtained as a result of the effect of individual differences. Furthermore, a desired illuminance cannot be obtained due to attachment of shaping material that flies off during shaping to the light projection surface of the UV lamp. Consequently, when an abnormality is identified in the shaped object or during exchange of the UV lamp, it has been suggested to measure the actual illuminance using an illuminance meter and execute a light intensity correction for the UV lamp in response to the measurement result.

However, in this configuration, measurement of the illuminance must be performed by use of an illuminance meter on each occasion that the UV lamp is exchanged or when an abnormality is identified in the shaped object, and therefore the problem arises that the configuration is complicated. Furthermore, the measurement of the illuminance using an illuminance meter is associated with the problem that an illuminance variation resulting from deterioration of the UV lamp itself cannot be discriminated from illuminance variation resulting from contamination of the light projection surface.

The present invention has been proposed in view of the above conventional problems and has the object of providing a three-dimensional shaping apparatus that enables irradiation of light at a suitable illuminance onto a shaped object by suppressing an effect due to individual differences or deterioration of the light source that irradiates light onto the shaped material that is ejected onto the shaping stage.

In particular, the present invention has the object of providing a three-dimensional shaping apparatus that enables simple correction of the light intensity of the light source. Furthermore, it has the object of providing a three-dimensional shaping apparatus that enables suppression of erroneous detection by an illuminance sensor due to shaping material that is ejected from the shaping material nozzle.

The present invention has the object of providing a three-dimensional shaping apparatus that enables irradiation of light onto the shaping material at a suitable illuminance even when temporal deterioration has occurred in the light source or when the scanning speed during main scanning changes. Furthermore, it has the object of providing a three-dimensional shaping apparatus that enables error output by detecting an illuminance variation due to contamination of the light projection surface of the light source.

The present invention has the object of providing a three-dimensional shaping apparatus that enables illuminance of the shaping material with light at a suitable illuminance in response to the scanning speed, or the thickness of the shaping material layer, or the type of the shaping material while suppressing the effect of individual differences or deterioration of the light source.

The three-dimensional shaping apparatus according to a first embodiment of the present invention includes a shaping material nozzle having two or more ejection ports aligned in a substantially linear configuration and configured to eject photocurable shaping material to the shaping stage, a light source configured to illuminate light onto the shaping material ejected onto the shaping stage and cure the shaping material, a moveable unit configured to retain the light source and the shaping material nozzle, a scanning device configured to scan the moveable unit parallel to the shaping stage in a direction that is orthogonal to the direction of alignment of the ejection ports, a vertical driving device configured to move the positions of the moveable unit and the shaping stage with respect to each other in the height direction, and a control device configured to control the scanning device, the vertical driving device, the ejection of the shaping material nozzle, and the light source. The three-dimensional shaping apparatus is configured to perform successive lamination of shaping material layers formed from shaping material that is ejected and cured on the shaping stage. The three-dimensional shaping apparatus includes an illuminance sensor provided at a position enabling receipt of light generated by the light source, and a light intensity correction device configured to correct the light intensity of the light source based on the illuminance detected by the illuminance sensor.

According to this configuration, since the light intensity correction of the light source that irradiates light onto the shaping material on the shaping stage is performed based on the illuminance detected by the illuminance sensor, the effect of individual differences or deterioration of the light source can be suppressed, and light can be irradiated at a suitable illuminance onto the shaping material. In particular, in comparison to a conventional shaping apparatus configured to measure an illuminance using an illuminance meter, troublesome operations can be avoided by adjusting the position of the illuminance meter and adjusting the output of the light source by inputting of the measurement value, to thereby enable simple adjustment of the output of the light source.

In addition to the above configuration, a three-dimensional shaping apparatus according to a second embodiment of the present invention is configured with a light receiving aperture in a moveable area of the light source and outside the moveable area of the shaping material nozzles. The illuminance sensor is configured to receive light generated by the light source through the light receiving aperture.

In this three-dimensional shaping apparatus, since the shaping material nozzle and the light source are mounted in the same moveable unit, depending on the mounting position, a region results in which the moveable area of the shaping material nozzle does not overlap with the moveable area of the light source. The disposition of the light receiving aperture used for the illuminance sensor in a non-overlapping region, that is to say, a region that is outside the moveable area of the shaping material nozzle and in the moveable area of the light source prevents the light receiving aperture from being opposed to the shaping material nozzles resulting from movement of the moveable unit. Therefore, it is possible to suppress contamination and closing of the light receiving aperture due to shaping material ejected from the shaping material nozzle, and suppress erroneous detection by the illuminance sensor.

In addition to the above configuration, the three-dimensional shaping apparatus according to a third embodiment of the present invention includes a configuration in which the shaping material nozzle and the light source are disposed at different positions along the scanning direction in the moveable unit, and the light receiving aperture is disposed at a position enabling opposition with the light source during scanning outside of the moveable area of the shaping material nozzle.

This three-dimensional shaping apparatus disposes the shaping material nozzle and the light source at different positions along the scanning direction in the moveable unit, and therefore creates a non-overlapping region that extends in the scanning direction between the moveable area of the shaping material nozzle and the moveable area of the light source. In this context, if the light receiving aperture is disposed on this non-overlapping region, opposition is possible with the light source during scanning. Therefore, it is possible to suppress erroneous detection by the illuminance sensor due to shaping material that is ejected from the shaping material nozzle and thereby enable measurement of the illuminance distribution related to the scanning direction of the light source.

In addition to the above configuration, the three-dimensional shaping apparatus according to a fourth embodiment of the present invention includes a configuration in which the scanning device configures the main scanning direction as the direction that is orthogonal to the alignment direction of the ejection ports, configures the sub-scanning direction as the direction that is orthogonal to the main scanning direction, and executes two-dimensional scanning of the moveable unit. The shaping material nozzle and the light source are disposed at different positions along the main scanning direction in the moveable unit, and the light receiving aperture is disposed at a position enabling opposition to the light source during scanning in the sub-scanning direction outside of the moveable area of the shaping material nozzle.

According to this configuration, erroneous detection by the illuminance sensor due to shaping material that is ejected from the shaping material nozzle can be suppressed, and measurement is possible of the illuminance distribution related to the sub-scanning direction of the light source.

In addition to the above configuration, the three-dimensional shaping apparatus according to a fifth embodiment of the present invention includes a configuration including an integrated light amount calculation device configured to integrate the illuminance detected when the light source during scanning in the main scanning direction passes over the light receiving aperture and to thereby calculate the integrated light amount. The light intensity correction device corrects the light intensity of the light source based on the integrated light amount.

The integrated light amount when the light source during scanning in the main scanning direction passes over the light receiving aperture varies due to the state of contamination of the light projection surface of the light source or due to the scanning speed during main scanning. Furthermore, the degree of curing of the shaping material layer is determined in response to the integrated light amount. As a result, by calculating the integrated light amount and correcting the light intensity of the light source based on the integrated light amount, it is possible to perform suitable curing of the shaping material layer without reference to the variation in the scanning speed in comparison to a configuration in which the light intensity correction is performed with reference to a peak value or an instantaneous value for the illuminance.

In addition to the above configuration, the three-dimensional shaping apparatus according to a sixth embodiment of the present invention has a configuration including a first illuminance distribution calculation device configured to calculate a first illuminance distribution with reference to the main scanning direction based on the illuminance detected when the light source during scanning in the main scanning direction passes over the light receiving aperture, a first illuminance distribution determination device configured to determine whether or not the first illuminance distribution is symmetrical, and an error output device configured to perform error output based on the determination result of the first illuminance distribution determination device.

If the light projection surface of the light source is contaminated, the illuminance distribution when the light source during scanning in the main scanning direction passes over the light receiving aperture is non-symmetrical depending on the opposed position of the light source and the light receiving aperture. In this context, an error output can be performed by detecting illuminance changes resulting from contamination of the light projection surface of the light source by determining by calculation whether or not the illuminance distribution relative to this type of main scanning direction is symmetrical.

In addition to the above configuration, the three-dimensional shaping apparatus according to a seventh embodiment of the present invention includes a configuration in which correction of the light intensity of the light source is performed by the light intensity correction device based on the determination result of the first illuminance distribution determination device. According to this configuration, it is possible to suppress the light intensity of the light source from being corrected when a change in the illuminance has resulted from the effect of contamination of the light projection surface.

In addition to the above configuration, the three-dimensional shaping apparatus according to an eighth embodiment of the present invention has a configuration including a second illuminance distribution calculation device configured to calculate a second illuminance distribution with reference to the sub-scanning direction based on the illuminance detected when the light source during scanning in the sub-scanning direction passes over the light receiving aperture, a second illuminance distribution determination device configured to determine whether or not the second illuminance distribution exceeds a determination threshold in relation to an interval corresponding to the light source, and an error output device configured to perform error output based on the determination result of the second illuminance distribution determination device.

Normally, the light source is configured so that the irradiation area covers the shaping material deposition layer band with the maximum width that can be formed in a single main scanning in relation to the sub-scanning direction. As a result, the illuminance distribution when the light source during scanning in the sub-scanning direction passes over the light receiving aperture can maintain the illuminance at least at a fixed level in an interval opposed to the light source if the light projection surface of the light source is not contaminated. However, if the light projection surface of the light source is contaminated, a reduction in the illuminance is caused in the interval corresponding to the contamination. In this context, an error output can be performed by detecting illuminance changes resulting from contamination of the light projection surface of the light source by calculating the illuminance distribution relative to the sub-scanning direction and determining whether or not the illuminance distribution exceeds a predetermined determination threshold in relation to the interval corresponding to the light source.

In addition to the above configuration, the three-dimensional shaping apparatus according to a ninth embodiment of the present invention has a configuration including an illuminance target generating device configured to generate an illuminance target based on the scanning speed, the thickness of the shaping material layer or the type of shaping material, and a power source for light source configured to supply power to the light source based on the illuminance target. The light intensity correction device is configured to correct the light intensity of the light source based on the adjustment of the output of the power source for light source so that the illuminance detected by the illuminance sensor coincides with the illuminance target.

According to the above configuration, the effect of individual differences or deterioration of the light source can be inhibited, and light can be illuminated onto the shaping material at a suitable illuminance in response to the scanning speed, the thickness of the shaping material layer or the type of shaping material.

Since the three-dimensional shaping apparatus according to the present invention corrects the light intensity of the light source that irradiates light onto the shaping material on the shaping stage based on the illuminance detected by the illuminance sensor, the effect of individual differences or deterioration of the light source can be inhibited, and light can be illuminated onto the shaping material at a suitable illuminance. In particular, since an illuminance sensor is provided, the light intensity of the light source can be simply corrected in comparison to a conventional shaping apparatus that measures the illuminance using an illuminance meter. Furthermore, it is possible to prevent opposition of the light receiving aperture for the illuminance sensor and the shaping material nozzle resulting from movement of the moveable unit, and therefore it is possible to suppress erroneous detection by the illuminance sensor due to shaping material ejected from the shaping material nozzle.

Since the three-dimensional shaping apparatus according to the present invention enables suitable curing of the shaping material layer without reference to a change in the scanning speed as a result of correcting the light intensity of the light source by calculation of the integrated light amount. Furthermore, error output based on detection of a change in the illuminance resulting from contamination of the light projection surface of the light source is enabled by determining by calculation whether or not the illuminance distribution relative to this type of main scanning direction is symmetrical. Furthermore, an error output based on detection of a change in the illuminance resulting from contamination of the light projection surface is enabled by calculating the illuminance distribution relative to the sub-scanning direction and determining whether or not the illuminance distribution exceeds a predetermined threshold value in relation to an interval corresponding to the light source.

According to the three-dimensional shaping apparatus in the present embodiment, the effect of individual differences or deterioration of the light source can be inhibited, and light can be illuminated onto the shaping material at a suitable illuminance in response to the scanning speed, the thickness of the shaping material layer or the type of shaping material.

### BRIEF DESCRIPTION OF THE DRAWINGS

Fig. 1 is a system diagram illustrating a configuration example of a shaping system 100 including a three-dimensional shaping apparatus 10 according to an embodiment of the present invention.
Fig. 2 is a perspective view illustrating a configuration example of the three-dimensional shaping apparatus 10 in Fig. 1 and illustrates an operation space 110 and a cartridge containing portion 130.
Fig. 3 illustrates an example of the schematic configuration of the head unit 111 in Fig. 2, and illustrates the appearance of the head unit 111 seen from the x, y, and z directions.
Fig. 4 schematically illustrates an example of the operation during shaping with the three-dimensional shaping apparatus 10 in Fig. 2, and illustrates the formation of a stereoscopic shaped object on a shaping stage 112.
Fig. 5 schematically illustrates an example of the operation during shaping with the three-dimensional shaping apparatus 10 in Fig. 2, and illustrates the main scanning forward path and the main scanning rearward path in the x direction.
Fig. 6 is a sectional view illustrating a configuration example of the UV lamp 351 in Fig. 3, and illustrates a cross-sectional surface when the UV lamp 351 is cut with a perpendicular surface that is parallel to the yz plane.
Fig. 7 illustrates the positional relationship between the head unit 111, the shaping stage 112, the purge tray 114 and the light receiving hole 115 in the operation space 110.
Fig. 8 illustrates the positional relationship between the irradiation areas A11, A21, and A22 of the UV lamp 351 and the recommended area A12 and A23.
Fig. 9 is a sectional view illustrating a configuration example of the illuminance sensor 60, and illustrates a cross-sectional surface when the illuminance sensor 60 disposed below the light receiving hole 115 is cut with a perpendicular surface that is parallel to the zx plane.
Fig. 10 is a block diagram illustrating an example of a functional configuration in the three-dimensional shaping apparatus 10 in Fig. 2.
Fig. 11 is a block diagram illustrating a configuration example of a lamp correction unit 207 in Fig. 10.
Fig. 12 illustrates an example of the lamp correction operation in the three-dimensional shaping apparatus 10 in Fig. 10, and illustrates the adjustment of the power source output and the illuminance variation due to the passage of accumulated lamp time.
Fig. 13 schematically illustrates an example of the lamp correction operation in the three-dimensional shaping apparatus 10, and illustrates an illuminance distribution measured during main scanning in the x direction.
Fig. 14 schematically illustrates an example of the lamp correction operation in the three-dimensional shaping apparatus 10, and illustrates an illuminance distribution measured during sub-scanning in the y direction.
Fig. 15 is a flowchart illustrating an example of the lamp correction operation in the three-dimensional shaping apparatus 10 in Fig. 10.

### DETAILED DESCRIPTION OF PREFERRED EMBODIMENTS

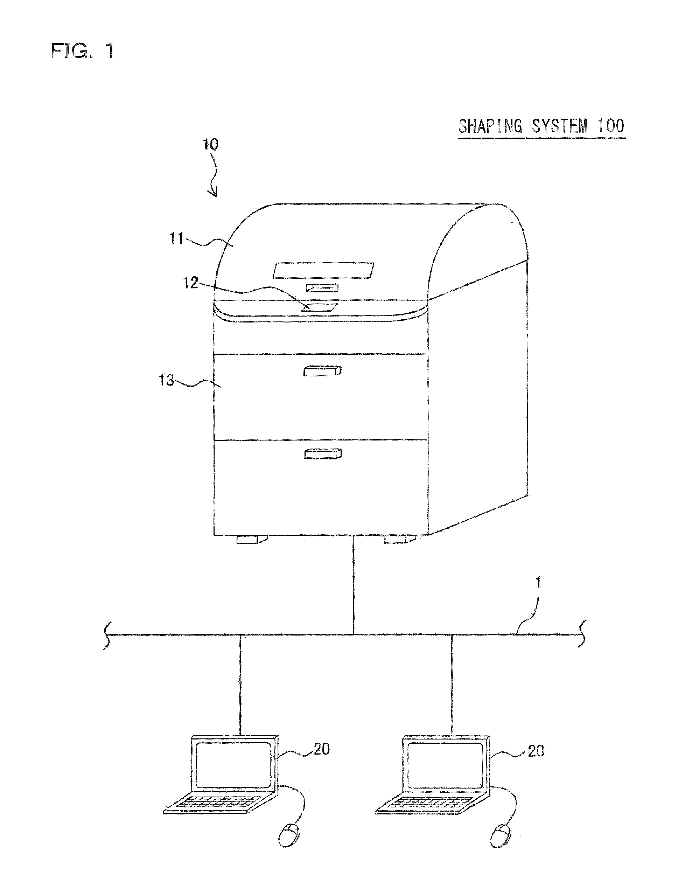

Firstly, the schematic configuration of an inkjet shaping apparatus forming the premise of the three-dimensional shaping apparatus according to the present invention will be described with reference to Fig. 1 to Fig. 5.

### Shaping System 100

Fig. 1 is a system diagram illustrating a configuration example of a shaping system 100 including a three-dimensional shaping apparatus 10 according to an embodiment of the present invention. The shaping system 100 is configured from a three-dimensional shaping apparatus 10, and a plurality of shaping ordering party terminals 20 connected to the three-dimensional shaping apparatus 10 through a local area network (LAN) 1.

The three-dimensional shaping apparatus 10 is an inkjet laminate shaping device, and uses a predetermined UV curing resin as a shaping material to thereby form a predetermined stereoscopic shaped object by successive lamination and formation of shaping material layers constituted from shaping material on the shaping stage described below. The shaping ordering party terminal 20 is a personal computer (PC) that is installed with application programs for three-dimensional shaping, and functions as a shaping data creating apparatus configured to create shaping data for manufacturing the desired stereoscopic shaped object.

The shaping data includes shape information indicating the three-dimensional shape of the object to be shaped and the shape conditions other than the shape information. The shaping data form example may be prepared based on CAD data, and as required, processed to be configured as data for a layer unit as layer data used in the three-dimensional shaping apparatus 10. However, the data processing for a layer unit may be performed in the three-dimensional shaping apparatus 10. Shaping conditions other than shape information is shaping information that can be designated without reference to the object to be shaped, and is disposition information indicating the disposition of the object to be shaped on the shaping stage and the shaping parameters such as the scanning speed, the thickness of the shaping material layer, the type of shaping material, and the like.

The shaping data created by the shaping ordering party terminal 20 is sent to the three-dimensional shaping apparatus 10. The three-dimensional shaping apparatus 10 manages a plurality of the shaping data received from the shaping ordering party terminal 20 through the LAN 1 as a shaping job. In other words, the shaping job is constituted by shaping data and attribute information that is retained by association to the shaping data. The attribute information includes identification information of the shaping data, the date and time of sending and receiving of the shaping data, and the identification information of the shaping ordering party. The shaping ordering party terminal 20 is a terminal apparatus used by the ordering party of the shaping processing.

An upper door 11, an operation display portion 12 and a front surface door 13 are provided on the three-dimensional shaping apparatus 10. The upper door 11 is an opening and closing door that regulates access from the outside to the operation space 110 described below and prevents fly of shaping material or the like into the external space. The upper door 11 enables access to the operation space by raising of the front side. The operation display portion 12 for example is configured from a touch panel, and receives an operation from a user or executes image display of various types of error messages or operation states. The front surface door 13 is an opening and closing door for the cartridge containing portion 130 such as a shaping material cartridge or the like, and enables access to the cartridge containing portion 130 by moving the upper portion towards the front side.

### Three-Dimensional Shaping Apparatus 10

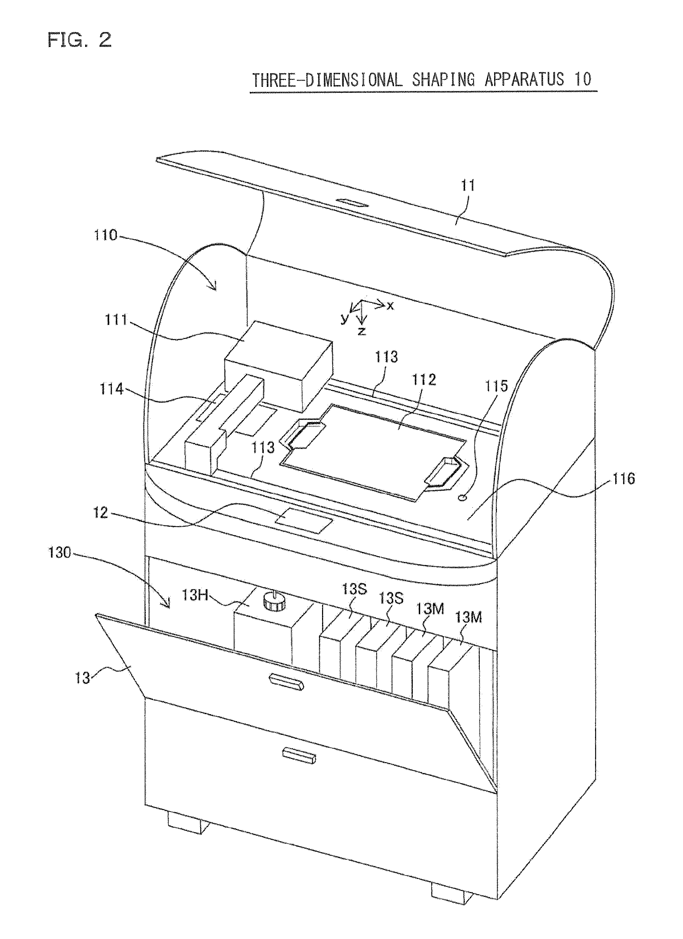

Fig. 2 is a perspective view illustrating a configuration example of the three-dimensional shaping apparatus 10 in Fig. 1 and illustrates an operation space 110 and a cartridge containing portion 130. In the figure, the three-dimensional shaping apparatus 10 is illustrated with the upper door 11 and the front surface door 13 in an open configuration.

The operation space 110 is a space enabling two-dimensional scanning by the head unit 111 that ejects shaping material or deposition of ejected shaping material onto the shaping stage 112, and is formed on the top plate 116 as an operation bench. An x-scanning engagement groove 113, a purge tray 114 and a light receiving hole 115 are disposed on the top plate 116.

The shaping stage 112 includes a horizontal flat shaping surface, and is a moveable stage for depositing shaping material on the shaping surface and forming a stereoscopic shaped object. The shaping stage 112 is disposed in the center of the top plate 116. The head unit 111 is a moveable unit for performance of two-dimensional scanning in parallel to the shaping stage 112 by use of a driving device (not illustrated).

In the three-dimensional shaping apparatus 10, the perpendicular direction is denoted as the z direction, and the orthogonal direction thereto is denoted as the xy direction. Therefore, the x direction that is the transverse direction when viewed by a user is the main scanning direction, and the y direction which is the longitudinal direction when viewed by a user is the sub-scanning direction to thereby perform two-dimensional scanning. The shaping material is ejected during scanning in the main scanning direction. Furthermore, the head unit 111 can be moved to an arbitrary position in a rectangular area during the two-dimensional scan, and that rectangular area is a moveable area.

In other words, the y direction is the direction of alignment of the rows of the plurality of orifices (the ejection ports 2 described below) that are respectively provided on the model material nozzle unit 32 and the supporting material nozzle unit 31. The x direction is the direction that is orthogonal to the y direction in the horizontal plane.

The x-scanning engagement groove 113 is a groove configured to engage with the driving apparatus that scans the head unit 111 in the main scanning direction, and is formed on the front end portion and rear end portion of the top plate 116. The purge tray 114 is a container for temporarily accommodating the shaping material ejected from the head unit 111 as used shaping material, and liquid shaping material formed from this type of shaping material is retained as a waste liquid. The purge tray 114 is disposed in a moveable area of the head unit 111 more to the left than the shaping stage 112.

In the three-dimensional shaping apparatus 10, periodic purge processing is performed during shaping processing. The purge processing is a process to clean the shaping material nozzle surface by removing residual material that remains in the ejection portion that is configured to eject the shaping material or in the shaping material supply passage that is configured to supply shaping material to the ejection port by moving the head unit 111 onto the purge tray 114 from the shaping stage 112 that acts as a shaping area, and forcibly ejecting shaping material from the shaping material nozzles 312, 322 that are mounted on the head unit 111. The shaping material nozzle surface is cleaned by abutment and sliding of a rubber member (not illustrated). In this context, the shaping material ejected from the nozzle is recovered to a liquid waste tank 13H.

The light receiving hole 115 is a light receiving aperture for the illuminance sensor configured to detect the illuminance of UV light for curing of the shaping material, and is formed from a through hole formed in the top plate 116. The light receiving hole 115 is disposed on the opposite side to the purge tray 114 to thereby sandwich the shaping stage 112. Furthermore, the actual operation is such that the illuminance detection switch of the lamp unit 35 provided on the operation display portion 12 is depressed to drive the head unit 111, automatically placed directly over the light receiving hole 115, the lamp unit 35 is illuminated, and the illuminance of the UV light is detected by the illuminance sensor provided in an inner portion of the light receiving hole 115.

Two model material cartridges 13M, two supporting material cartridges 13S, and a liquid waste tank 13H are accommodated in the cartridge containing portion 130. The shaping material ejected from the head unit 111 includes model material M configuring the shaped object itself and the supporting material S that is configured to support an overhang portion or isolated portion of the model material M, and that is finally removed.

In the present embodiment, the supporting material S, in comparison to the model material M, includes a material that has a high solubility in water that is used to remove the supporting material S. The overhang portion denotes a portion of the shaping material which extends in the x-y plane more than the shaped portion positioned below in the z direction (that is to say, the height direction). In other words, the shaped object that includes an overhang shape is a shaped object that has a portion (overhang portion) that forms a slice of new model material on the upper surface of a portion on which a slice of already formed model material is not present.

The model material cartridge 13M is a detachable shaping material tank that accommodates the model material M prior to use. The supporting material cartridge 13S is a detachable shaping material tank that accommodates the supporting material S prior to use. That is to say, the shaping material prior to ejection from the shaping material nozzles 312, 322 of the head unit 111 is accommodated in the model material cartridge 13M or the supporting material cartridge 13S.

The liquid waste tank 13H is a reservoir container for accumulating waste liquid recovered from the roller drain tray (not illustrated) in the head unit 111 described below or the purge tray 114, and can be removed to thereby exchange. The liquid waste tank 13H is provided with a sensor configured to detect the liquid level in an internal portion and a weight sensor configured to detect the weight of the waste liquid tank 13H to thereby enable the function of detecting the level of the waste liquid in the liquid waste tank 13H and notifying an operator.

### Head Unit 111

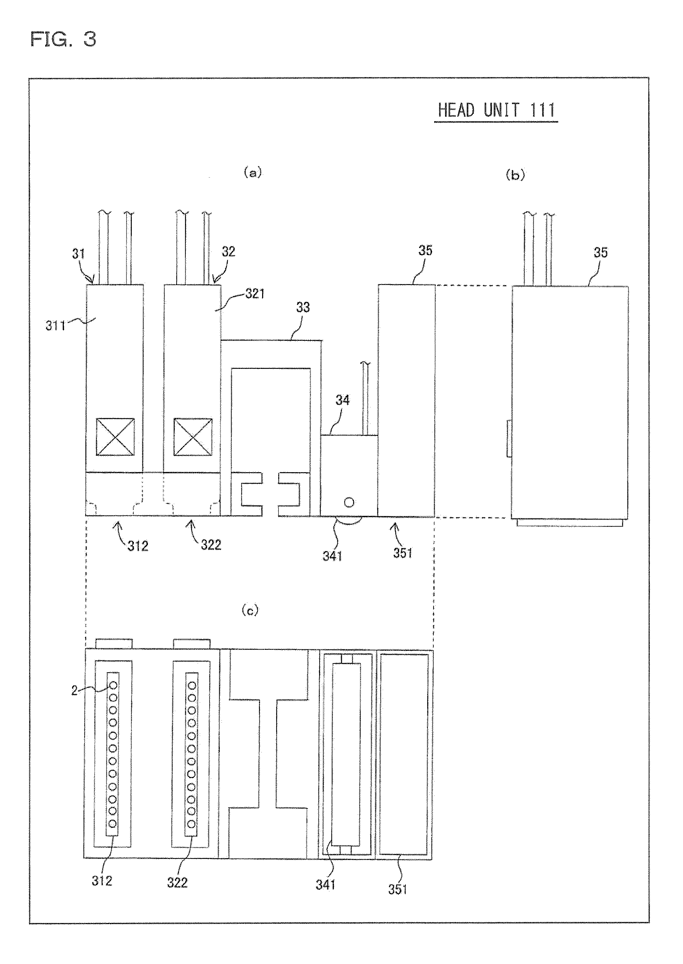

Fig. 3 illustrates an example of the schematic configuration of the head unit 111 in Fig. 2, and illustrates (a) the appearance of the head unit 111 seen from the y direction (the direction of sub-scanning of the head unit 111), (b) the appearance of the head unit 111 seen from the x direction (the direction of main scanning of the head unit 111), and (c) the appearance seen from the z direction.

The head unit 111 includes a supporting material nozzle unit 31, a model material nozzle unit 32, a y-scanning holder unit 33, a roller unit 34, and a lamp unit 35. These units 31 to 35 are retained in an integrated configuration. The units 31 to 35 are disposed in order in the x direction.

The basic approach to the x-direction arrangement of the supporting material nozzle unit 31, the model material nozzle unit 32, the roller unit 34, and the lamp unit 35 is as follows. When the main scanning direction and the forward path direction of the head unit 111 is considered as a base, either one of the supporting-material ejection nozzle unit 31 and the model-material ejection nozzle unit 32 may be positioned in front of the other. In relation to this nozzle layout, when the roller unit 34 and the lamp unit 35 perform a roller operation on the forward path, in the forward direction of travel, the roller unit 34 and the lamp unit 35 are disposed in order after the supporting-material ejection nozzle unit 31 and the model-material ejection nozzle unit 32, and when the roller operation is performed on the rearward path, the roller unit 34 and the lamp unit 35 may be disposed in order after the supporting-material ejection nozzle unit 31 and the model-material ejection nozzle unit 32 in the rearward path of travel.

In the above embodiment, a method of irradiation with UV light is adopted in which, after ejecting resin from the head unit 111 to form a new uppermost layer, and after scraping off excess resin with the roller unit 34 in relation to the resin layer in the uppermost layer in an uncured state during shaping, at least the uppermost resin layer is cured by the lamp unit 35.

However in addition to this configuration, there is also a method in which after ejecting resin from the head unit 111 to form a new uppermost layer, and after performing a single irradiation operation with the lamp unit 35 in relation to the uppermost resin layer including the excess resin layer, scraping of the excess resin layer is executed using the roller unit 34 on the uncured uppermost resin layer during shaping, and then the lamp unit 35 re-performs irradiation of UV light to cure at least the uppermost resin layer.

In this case, the lamp unit 35 can perform the irradiation operation twice as described above by provision of a pair of lamp units 35 in the longitudinal direction to sandwich the supporting-material ejection nozzle 31 and the model-material ejection nozzle 32 in the x direction in relation to the head unit 111 in the x direction, that is to say, in the main scanning direction of the head unit 111. Furthermore, in this case, in order to achieve a finally desired degree of curing of the resin by a combination of the first irradiation and the second irradiation, the resin after the first irradiation is not in a cured state, and is a fluid semi-cured state so that a scraping operation can be performed thereafter by the roller unit 34. Consequently, in this configuration, the state of the uppermost layer before scraping with the roller unit 34 is an uncured state or a fluid state.

The model material nozzle unit 32 is a nozzle unit configured to eject model material M supplied from the model material cartridge 13M, and includes a reserve tank 321 configured to temporarily accommodate the model material M, and the shaping material nozzle 322 in which a plurality of ejection ports 2 are arranged in the y direction to eject model material M to the shaping stage 112.

The supporting material nozzle unit 31 is a nozzle unit configured to eject supporting material S supplied from the supporting material cartridge 13S, and includes a reserve tank 311 configured to temporarily accommodate the supporting material S, and the shaping material nozzle 312 in which a plurality of ejection ports 2 are arranged in the y direction to eject supporting material S.

The model material M and the supporting material S are provided respectively in the shaping material nozzles 322 and 312. Vibration of piezoelectric elements provided in the nozzle unit of each of the ejection ports 2 is used to form droplets and eject the droplets from the ejection ports 2. The ejection ports 2 are arranged in a linear configuration in the y direction with a fixed pitch.

The head unit 111 is configured to form a shaping material deposition band, that has a predetermined width in relation to the arranged length of all ejection ports 2 provided respectively on the shaping material nozzles 312, 322, on the shaping stage 112 using a single main scan by scanning in the x direction while ejecting shaping material from the shaping material nozzles 312, 322.

The y-scanning holder unit 33 is supported on a bridging member that connects the interval with the x-scanning engagement groove 113 in order to scan the head unit 111 in the sub-scanning direction. The y-scanning holder unit 33 is supported on the bridging member and has a structure in which the head unit 111 is driven along a shaft that extends in the y direction (not illustrated) that is provided on the bridging member (the sub-scanning direction of the head unit 111) by a driving unit (not illustrated) that is provided on the bridging member. The drive unit may be housed in the head unit 111 itself and displaced on the shaft described above as the method of driving of the head unit 111 in the y direction (the sub-scanning direction of the head unit 111).

The roller unit 34 includes a film thickness adjustment roller 341, a driving unit (not illustrated) configured to rotate the roller 341, and a roller drain tray (not illustrated) configured to temporarily accommodate the shaping material scraped from the uppermost surface of the shaping material layer formed on the shaping stage 112 by the film thickness adjustment roller 341.

The film thickness adjustment roller 341 adjusts the thickness of the shaping material film deposited by ejection onto the shaping stage 112. More specifically, the film thickness adjustment roller 341 is configured to optimize the thickness of the uppermost surface layer by scraping a portion of the uppermost surface layer formed in the shaping material ejected from the shaping material nozzles 312, 322 to a predetermined thickness prior to curing with the lamp unit 35. The film thickness adjustment roller 341 is also a roller that smoothes the surface of the shaping material film and is rotated in the y direction about a rotation axis. Still more specifically, the film thickness adjustment roller 341 is rotated in the direction of component ordering relative to the direction of travel of the head unit 111 when the film thickness adjustment roller 341 is operated. The shaping material accommodated in the roller drain tray after scraping with the film thickness adjustment roller 341 is conveyed to the liquid waste tank 13H as discharge liquid formed from used shaping material.

The lamp unit 35 is configured from a UV lamp 351 that irradiates UV light onto the shaping material film deposited by ejection onto the shaping stage 112, and enables formation of an irradiated area with a width that is greater than the alignment length of the ejection port 2 on the shaping stage 112.

When adopting the layout of the lamp unit 35 illustrated in Fig. 3, the head unit 111 is displaced from left to right in the figure, that is to say, in the so-called forward path of the main scan, the lamp unit 35 is disposed at a position of travel further than the shaping material nozzles 312, 322, and therefore, UV light is not irradiated onto the surface of the shaped object ejected in the forward path. Therefore, the lamp may be constantly lit into order to simplify lighting control. The actual irradiation of UV light is performed in the rearward path by the film width adjustment roller 341 in relation to the uppermost surface after suitable adjustment of the uppermost surface of the shaped object.

As long as the lamp unit 35 is a light source that irradiates UV light, there is no limitation to a UV irradiation lamp, and the unit 35 includes an LED light source that irradiates UV light. That is to say, it is a light irradiation device for curing of a resin by irradiation of light having a specific wavelength that is required for curing of a resin, such as UV light. Furthermore, in substitution for a light-curable resin, a thermoplastic resin may be employed that is cured by a predetermined temperature as the shaping resin. Consequently, in substitution for the lamp unit 35 of the present invention, a cooling or heating device may be employed as the resin curing means, and in some configurations, the lamp may not be required.

### Shaping Process

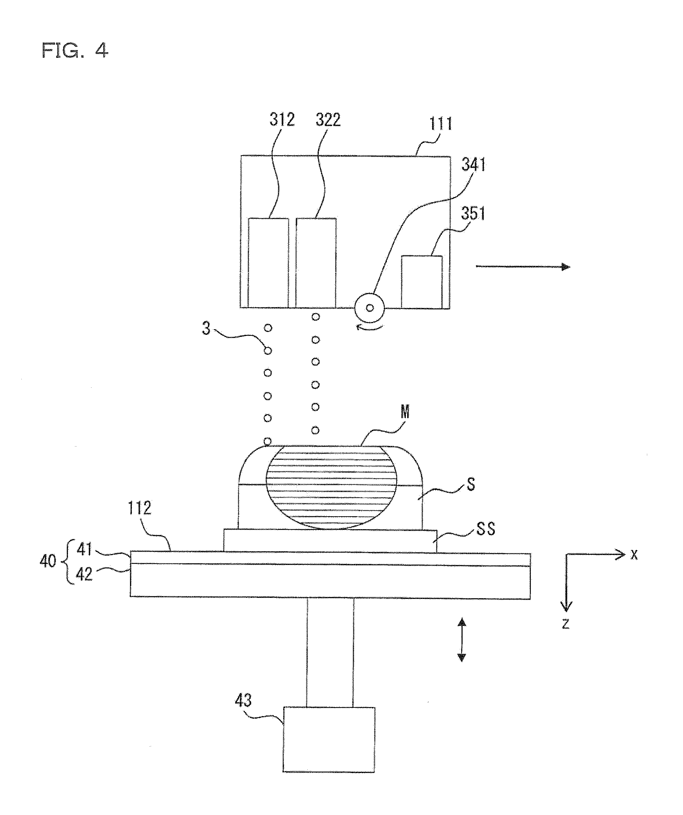

Fig. 4 schematically illustrates an example of the operation during shaping with the three-dimensional shaping apparatus 10 in Fig. 2, and illustrates the formation of a stereoscopic shaped object on a shaping stage 112. In the figure, the sectional surface is shown in a configuration when the head unit 111 and the shaping stage 112 of a three-dimensional shaping apparatus 10 during shaping of a stereoscopic shaped object are cut in a vertical surface parallel to the zx surface.

The model material M and the supporting material S are ejected as droplets 3 downwardly from the head unit 111 during scanning in the main scanning direction (x direction) onto the shaping stage 112. The shaping material layer formed from shaping material deposited by ejection onto the shaping stage 112 during the main scanning forward path is adjusted to a film thickness by the film thickness adjustment roller 341 during the main scanning rearward path, and cured by irradiation with UV light from the UV lamp 351. In the description above, the ejection of the model material M and the supporting material S is performed in the forward direction of the main scan, and may be performed in the rearward path of the main scan of the head unit 111. Furthermore, ejection of the model material M and the supporting material S may be performed separately in the rearward path of the main scan of the head unit 111.

The model material M and the supporting material S in the present embodiment are both UV curable resins, and are cured by irradiation with UV light from the same UV lamp 351. In addition to a photocurable resin, a resin that can be used in the three-dimensional shaping apparatus 10 includes a thermo-curable resin that is cured by application of heat, a thermoplastic resin that is cured by natural cooling, and the like.

The band shaped region having a fixed width relative to the length (head width) in the y direction of the head unit 111 is termed a field, and when formation of a shaping material layer is completed in a given field, the head unit 111 is moved in the sub-canning direction (y direction), and commences formation of a shaping material layer in relation to the adjacent field. The position to which the head unit 111 is moved in the sub-scanning direction (y direction) is determined by the positional arrangement of the shaped object or the like that is formed on the shaping stage 112. That determination is performed based on the input of an ordering party in the shaping ordering party terminal 20. The shaping material deposition band is a shaping material layer having the maximum width that can be formed in the field.

The head unit 111 is supported on the gate-shaped bridging member that straddles the interval with the x-scanning engagement grooves 113 in the y direction, and scans the main scanning direction along the pair of x-scanning engagement grooves 113. Although the present embodiment is configured by supporting the head unit 111 on the gate-shaped bridging member and moving the head unit 111 in the main scanning direction along the pair of x-scanning engagement grooves 113, a configuration is possible in which one x-scanning engagement groove 113 is provided, and the head unit 111 is moved in the main scanning direction in a cantilevered support configuration.

The width in the y direction in which shaping is enabled by the model material nozzle unit 32 and the supporting material nozzle unit 31 disposed on the head unit 111 is short in relation to the shaping area on the shaping stage 112, and therefore, when shaping of one field portion is completed by reciprocating movement of the head unit 111 in the main scanning direction, the head unit 111 is moved in the sub-scanning direction (y direction) to shape the adjacent field. When a stereoscopic shaped object set by a user is contained in a single field, the head unit 111 is not moved in the sub-scanning direction. When the width in the y direction in which shaping is enabled by the head unit 111 is greater than or equal to the width in the y direction of the shaping area on the shaping stage 112, the head unit 111 is not required to perform shaping while moving in the sub-scanning direction, and therefore a movement mechanism in the sub-scanning direction is not required.

A shaping material layer is formed in each field by the main scanning and sub-scanning of the head unit 111 as described above on the shaping stage 112, and thereby a single resin layer that forms the stereoscopic shaped object is formed. This resin layer is termed a slice layer, and when formation of a slice layer is completed at a given position in the z direction, the shaping stage 112 is moved downwardly (z direction) by a distance corresponding to the thickness of the slice layer to thereby commence formation of the next slice layer.

In the three-dimensional shaping apparatus 10, the upper surface of a detachable conveyance plate 41 is the shaping stage 112, and a z-displacement unit 40 that can move with respect to the z direction is configured from the conveyance plate 41 and a plate mounting base 42 configured to mount the conveyance plate 41. The position in the z direction of the z-displacement unit 40 is adjusted by a z-driving apparatus 43. The z-driving apparatus 43 is a vertical driving device configured to vary the relative positions in the height direction of the head unit 111 and the shaping stage 112. The conveyance plate 41 is configured from a rectangular metal plate, and can be removed from the plate mounting base 42 with the stereoscopic shaped object mounted thereon upon completion of all shaping that is instructed by the shaping ordering party terminal 20. A predetermined fixing mechanism (not illustrated) is provided in order to fix the conveyance plate 41 to the plate mounting base 42.

The stereoscopic shaped object is configured by the model material M, and the supporting material S is configured to support an overhang portion or isolated portion of the stereoscopic shaped object, and is finally removed by a predetermined method. For example, when a resin that is not water insoluble or soluble-resistant is used as the model material M, and a water soluble resin is used as the supporting material S, immersion into water after removal of the shaped object formed on the conveyance plate 41 enables simple removal of only shaped object layers formed from the supporting material S. Furthermore, it is needless to point out that removal of supporting material S from the model material M that configures the shaped object may be performed by manual removal of the supporting material S from the model material M as in a conventional example.

In this example, a desired stereoscopic shaped object is formed by laminating slice layers formed from the model material M and the supporting material S on a lower base layer SS formed on the conveyance plate 41. The lower base layer SS is adapted to remove unevenness from the surface or a tilt in the conveyance plate 41 and is formed from supporting material S that facilitates peeling of the shaped object. When the lower base layer SS is configured to enable removal of unevenness from the surface or a tilt in the conveyance plate 41, a reduction in the used amount of material is enabled by adoption of a hollow structure such as a lattice structure in addition to a solid structure in relation to the shaping conditions given by the shaping ordering party terminal 20.

### Main Scanning

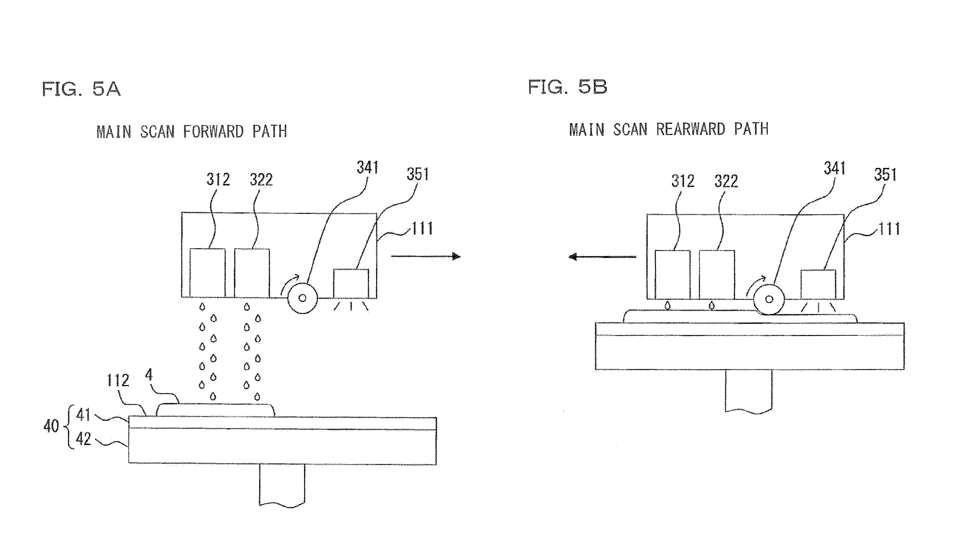

Fig. 5 schematically illustrates an example of the operation during shaping with the three-dimensional shaping apparatus 10 in Fig. 2, and illustrates (a) the appearance in the main scanning forward path in the x direction, and (b) the appearance in the main scanning rearward path. In the main scanning forward path, the position of the shaping stage 112 relative to the z direction is fixed to a position that is separated from the head unit 111, and the model material M and the supporting material S are ejected from the shaping material nozzles 312, 322. The shaping material layer 4 is formed from these shaping materials on the shaping stage 112.

The distance between the head unit 111 and the shaping stage 112 disclosed in Fig. 5(a) and the distance between the head unit 111 and the shaping stage 112 disclosed in Fig. 5(b) are illustrated to be clearly different. However, this is merely for the purposes of clarity of description of the details of the operation, and actually, the distance between the head unit 111 and the shaping stage 112 in the configuration illustrated in Fig. (a) is no more than 2 mm, and the distance in Fig. 5(b) is adapted so that a distance of no more than 1 mm results from movement of the shaping stage 112 from the configuration illustrated in Fig. 5(a) towards the head unit 111 in the z direction.

The thickness of the shaping material layer 4 can be determined from the point of view of the shaping speed and the shaping accuracy. In other words, when a user makes a selection to prioritize shaping accuracy, the thickness of the shaping material layer 4 is set to the minimum thickness that can be set or an approximate thickness, and therefore can be set to a thickness that maintains the minimum shaping accuracy. This type of selection may be adapted for selection and setting of shaping conditions in addition to the shape information in the shaping ordering party terminal 20.

The scan performed in the main scanning rearward path is performed in a configuration in which the shaping stage 112 is displaced upwardly to a position in which the film thickness adjustment roller 341 makes contact with the shaping material layer 4. In addition to the ejection of shaping material that is performed in the main scan forward path, model material M and supporting material S can be ejected from the shaping material nozzles 312, 322 in the main scan rearward path, and the upper layer portion of the shaping material layer 4 that is deposited by ejection in the main scan forward path and rearward path is scraped off by the film thickness adjustment roller 341.

There are individual differences in the ejection amount of shaping material from each nozzle disposed in the shaping material nozzles 312, 322. Furthermore, since there are problems associated with control of the ejection amount of shaping material from the shaping material nozzles 312, 322, a shaping material layer 4 having a preset thickness can be maintained and a shaping material layer 4 with a uniform thickness can be laminated by ejecting shaping material from the shaping material nozzles 312, 322 to form a thickness greater than or equal to a set thickness at least in relation to a unit for formation of each shaping layer and recovering excess shaping material with the film width adjustment roller 341 so that a shaping material layer 4 that has a preset thickness is ensured. However, the timing of abutment of the film width adjustment roller 341 with the uppermost surface of the shaping layer at that time is not required in relation to the uppermost layer at a data unit for each slice layer as shaping data, and may be performed at a required timing that is determined in relation to the various aims of the shaping process, for example, from the point of view of achieving both shaping accuracy and shaping speed.

The film width adjustment roller 341 rotates in the same direction at a fixed rotation speed irrespective of the forward and rearward path of the main scan. The UV lamp 351 is turned on at a predetermined light intensity in response to the scanning speed in the x direction, the thickness of the shaping material layer 4 and the type of shaping material, and mainly, curing is performed by irradiation with UV light of the shaping material layer 4 after film thickness adjustment by the film width adjustment roller 341.

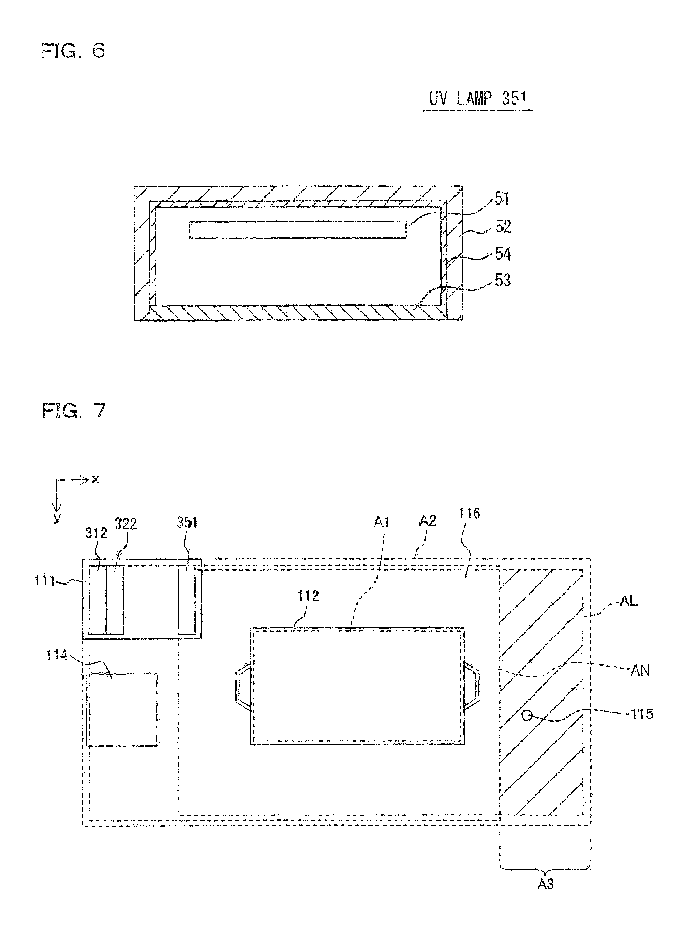

Next, the configuration for inhibiting the effect of individual differences resulting from temporal deterioration or the initial value of the light intensity of the light source, or irradiation of light at an illuminance that is adapted to the shaping material will be described using Fig. 6 to Fig. 15.

### UV Lamp 351

Fig. 6 is a sectional view illustrating a configuration example of the UV lamp 351 in Fig. 3, and illustrates a cross-sectional surface when the UV lamp 351 is cut with a perpendicular surface that is parallel to the yz plane. The UV lamp 351 is for example a metal halide lamp or high pressure mercury lamp, and includes a linear light source 51 that is extended in the y direction, a housing 52, a cover glass 53 and a reflecting mirror 54.

The linear light source 51 is configured from a linear light emission element that generates UV light, and is disposed in a horizontal configuration in the housing 52. The reflective mirror 54 is a mirror configured to guide the light that is incident on the inner wall surface of the housing 52 of the light that is emitted from the linear light source 51 to an aperture portion in the housing 52, and is disposed on a side wall surface and the upper wall surface in the housing 52. The cover glass 53 is a transparent glass plate for protecting the linear light source 51, and is disposed in the aperture portion of the housing 52.

When the linear light source 51 is lit, the lower surface of the cover glass 53 acts as a light projection surface, and UV light is generally emitted with a uniform intensity onto the light projection surface to thereby irradiate an area opposed to the UV lamp 351. When using an inkjet lamination shaping method, a scan pass along the main scanning forward path and that along the main scanning rearward path in the x direction are simply referred to as a pass, respectively. The shaping material layer in a single field is formed by a plurality of passes. The irradiation area on the shaping stage 112 of the UV lamp 351 has a width that is greater than the shaping material deposition band that has the maximum width that can be formed by a single pass, and that shaping material deposition band can be cured uniformly by a single pass.

### Recommended Area A3

Fig. 7 illustrates the positional relationship between the head unit 111, the shaping stage 112, the purge tray 114 and the light receiving hole 115 in the operation space 110. The head unit 111 can displace to an arbitrary position within the rectangular moveable area A2 during main scanning in the x direction and sub-scanning in the y direction.

The moveable area A2 is the maximum area in which the head unit 111 can be moved. Even when the mechanical limit is wider, when the moveable area A2 is smaller than the area that can be controlled by use of software, it corresponds to the maximum area that can be realized by software control.

When the head unit 111 moves within the moveable area A2, the shaping material nozzles 312, 322 within the head unit 111 move within the nozzle moveable area AN. The nozzle moveable area AN is a rectangular area including the purge tray 114 and the shaping area A1 on the shaping stage 112.

The UV lamp 351 is disposed at a different position in the x direction in relation to the shaping material nozzles 312, 322 in the head unit 111. That is to say, the UV lamp 351 is disposed more to the right than the shaping material nozzles 312, 322. As a result, the lamp moveable area AL for the UV lamp 351 is a rectangular area including the shaping area A1, and the right end portion includes the region which does not overlap with the nozzle moveable area AN. The non-overlap region is formed on the side opposite the purge tray 114 to sandwich the shaping area A1 in relation to the x direction.

The purge tray 114 is disposed in the nozzle moveable area AN more to the left than the shaping area A1. The head unit 111 is periodically moved onto the purge tray 114 during the shaping process, and a purge process is performed in which shaping material is ejected from the shaping material nozzles 312, 322.

The illuminance sensor light receiving hole 115 can be opposed with the UV lamp 351 and a disposition is preferred at a position that is not opposed to the shaping material nozzles 312, 322 irrespective of any motion by the head unit 111 within the moveable area A2 in order to prevent clogging of the aperture by erroneously ejected shaping material. In this context, the non-overlapping region that is within the lamp moveable area AL and outside the nozzle moveable area AN is configured as the recommended area A3, and the light receiving hole 115 is disposed within the recommended area A3.

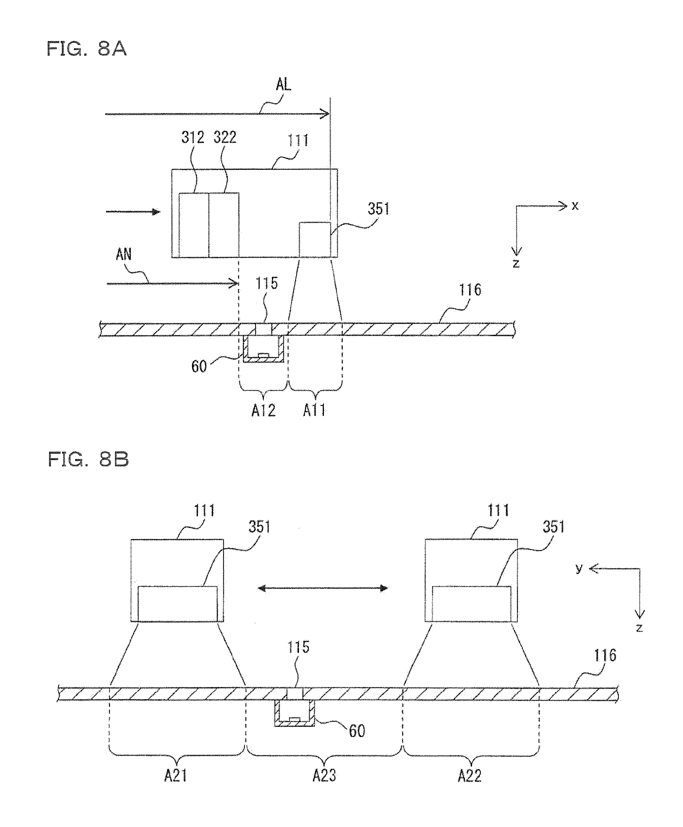

Fig. 8 illustrates the positional relationship between the irradiation areas A11, A21, A22 of the UV lamp 351 and the recommended areas A12, A23. In the figure, (a) illustrates the irradiation area A11 and the recommended area A12 when the head unit 111 is positioned on the right end in the main scanning direction when the head unit 111 is viewed from the y direction.

The irradiation area A11 is an area on the top plate 116 forming the light receiving hole 115, and is a rectangular area in which the illuminance exceeds a fixed level. In order to measure the illuminance distribution in relation to the range in the x direction that corresponds to the irradiation area A11, the recommended area A12 is a rectangular area outside the nozzle moveable area AN and outside the irradiation area A11 when the head unit 111 is positioned at the right end in the main scanning direction. That is to say, the illuminance sensor 60 is disposed outside of the nozzle moveable area AN at a position which can be opposed to the UV lamp 351 during scanning in the x direction.

In the figure, (b) illustrates the recommended area A23 and the irradiation area A21, A22 when the head unit 111 is disposed on the front end and the rear end in the sub-scanning direction and the head unit 111 is seen from the x direction. The irradiation area A21, A22 is a rectangular area on the top plate 116 in the same manner as the irradiation area A11.

The recommended area A23 is a rectangular area that is outside the irradiation area A21 when the head unit 111 is disposed on the front end in the sub-scanning direction and outside the irradiation area A22 when disposed on the rear end of the sub-scanning direction so that the irradiation distribution can be measured in relation to the scope in the y direction corresponding to the irradiation area A21, A22. That is to say, the illuminance sensor 60 is disposed outside of the nozzle moveable area AN at a position that can be opposed with the UV lamp 351 during scanning in the y direction.

### Illuminance Sensor 60

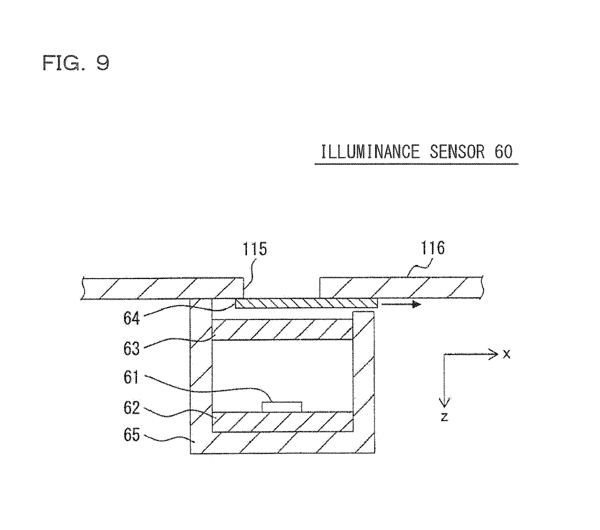

Fig. 9 is a sectional view illustrating a configuration example of the illuminance sensor 60, and illustrates a cross-sectional surface when the illuminance sensor 60 disposed in the light receiving hole 115 is cut with a perpendicular surface that is parallel to the zx plane. The illuminance sensor 60 is an illuminance detection apparatus configured to detect an illuminance, and is configured from a PD (photodiode) 61, a base plate 62, a heat shield filter 63, a contamination prevention cover 64, and a housing 65.

The PD 61 is a light receiving element that receives incident light through a light receiving hole 115 and generates a detection signal indicating the illuminance on the top plate 116, and is formed on the base plate 62. The base plate 62 is accommodated on the bottom portion in the housing 65 with the formation surface of the PD 61 being oriented upwardly.

The heat shield filter 63 is an infrared filter for shielding radiant heat from the UV lamp 351, and is disposed on the aperture portion of the housing 65. The contamination prevention cover 64 is a shielding plate configured to prevent attachment of shaping material flying during shaping of particulate matter to the heat shield filter 63, and is disposed to cover the light receiving hole 115.

The opening of the housing 65 is disposed opposite the light receiving hole 115. The light receiving hole 115 for example is opened by sliding the contamination prevention cover 64 manually in the x direction.

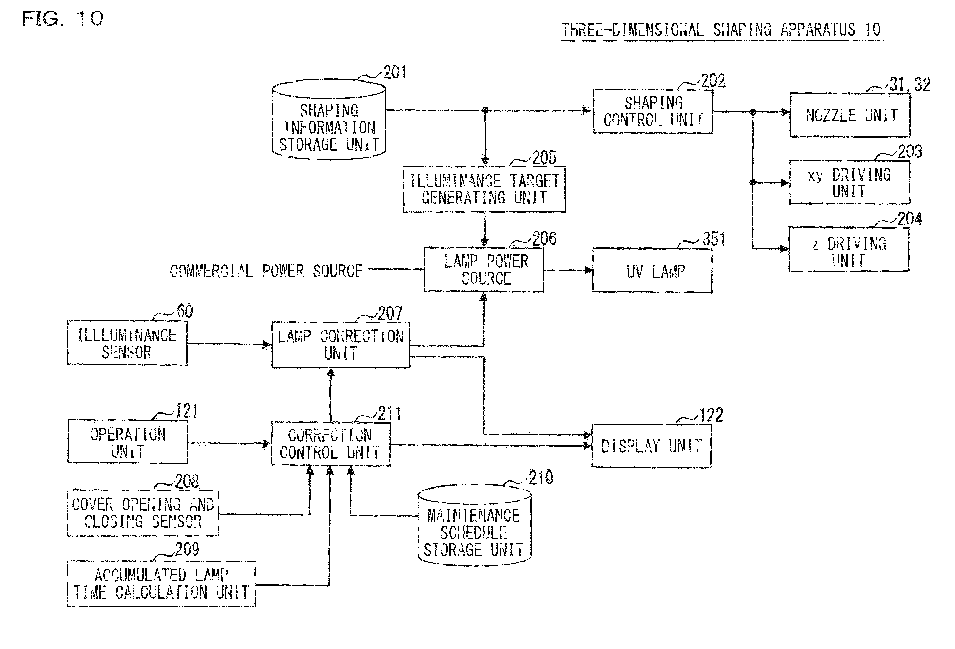

Fig. 10 is a block diagram illustrating an example of a functional configuration in the three-dimensional shaping apparatus 10 in Fig. 2. The three-dimensional shaping apparatus 10 includes nozzle units 31, 32, an illuminance sensor 60, a UV lamp 351, an operation unit 121, a display unit 122, a shaping information storage unit 201, a shaping control unit 202, an xy driving unit 203, a driving unit 204, an illuminance target generating unit 205, a lamp power source 206, a lamp correction unit 207, a cover opening and closing sensor 208, an accumulated lamp time calculation unit 209, a maintenance schedule storage unit 210, and a correction control unit 211.

The shaping information storage unit 201 retains a plurality of shaping data acquired from the shaping ordering party terminal 20 together with identification codes for identification of shaping jobs. The shaping control unit 202 controls the nozzle units 31, 32, the xy driving unit 203 and the z driving unit 204 based on shaping data that is designated as an object to be executed, and thereby performs shaping processing for forming of the shaping object. In this shaping processing, xy scan control of the head unit 11, z position adjustment of the shaping stage 112, ejection control of shaping material by driving control of the piezoelectric element in the nozzle unit 31, 32 and light emission control of the UV lamp 351 are performed.

The illuminance target generating unit 205 generates an illuminance target based on the shaping data in the shaping information storage unit 201, and outputs to the lamp power source 206. The illuminance target is an illuminance reference value for adjusting the brightness of the UV lamp 351 so that the illuminance takes a suitable value in relation to the type of the shaping material, the thickness of the shaping material layer, and the scanning speed during main scanning.

The lamp power source 206 is a power source apparatus for light source that enables output for driving of the UV lamp 351 by use of electrical power supplied from a commercial power source, and supplies power to the UV lamp 351 based on an illuminance target. For example, the output voltage is adjusted in response to the illuminance target so that the illuminance on the shaping stage 112 coincides with the illuminance target by use of a voltage table that includes output voltages for respective illuminance targets.

Generally, the type of model material M is changed in response to the characteristics required by the stereoscopic shaped object. As a result, the quality of the shaped object can be enhanced by fixing by irradiation of the model material M at an illuminance corresponding to the curing characteristics of the model material M. On the other hand, the supporting material S as a small effect on the quality of the shaped object, and therefore the allowable scope of illuminance is greater than the model material M. Therefore, the illuminance target is determined in response to the type of model material M.

When the shaping material layer is configured with a high thickness, although the resolution with respect to the z direction is reduced, the time required for shaping processing (shaping time) is reduced. As a result, the thickness of the shaping material layer is determined with reference to the required resolution in the z direction and the allowable scope of the shaping time. When the thickness of the shaping material layer is high, the resin amount that must be cured within a fixed time increases, and therefore there is a need to increase the illuminance of UV light, and the illuminance target is determined in response to the thickness of the shaping material layer.

When the scanning speed during scanning in the x direction is increased, although the resolution with respect to the x direction is reduced, the shaping time is reduced. As a result, the scanning speed during main scanning is determined with reference to the required resolution in the x direction and the allowable scope for the shaping time. When the scanning speed is high, less time is available for irradiation of the resin by light and therefore there is a need to increase the illuminance of UV light. The illuminance target is determined in response to the scanning speed during scanning in the x direction.

The lamp correction unit 207 performs a correction on the output of the UV lamp 351 based on the output of the illuminance sensor 60. More specifically, the light intensity correction on the UV lamp 351 is performed by correcting the voltage value in the voltage table retained by the lamp power source 206 so that the actual illuminance corresponds with the illuminance target based on the detection signal of the illuminance sensor 60.

The correction control unit 211 commands the output correction for the UV lamp 351 to the lamp correction unit 207 at a timing designated in the maintenance schedule or based on a user operation, or displays various types of messages related to the output correction on the display unit 122. The maintenance schedule storage unit 210 retains the maintenance schedule that includes time information related to periodic maintenance and inspection of the UV lamp 351.

For example, an output correction for the UV lamp 351 is commanded at a timing commanded by a user input operation. Alternatively, the output correction is automatically commanded upon reaching a time that is preset in the maintenance schedule. The periodic output correction is commanded based on the accumulated lamp time of the UV lamp 351. Alternatively, output correction is commanded when exchanging the UV lamp 351.

When commanding output correction, the correction control unit 211 displays a warning message on the display unit 122 to prompt a user to exchange the UV lamp 351 when the output of the lamp power source 206 reaches an upper limit and the target illuminance is not reached.

The cover opening and closing sensor 208 is a sensor configured to detect the opening or closing configuration of the contamination prevention cover 64 of the illuminance sensor 60. When commanding output correction, the correction control unit 211 displays a warning message on the display unit 122 to prompt a user to open the contamination prevention cover 64 when the contamination prevention cover 64 remains closed.

The accumulated lamp time calculation unit 209 sums the lamp time of the UV lamp 351 to thereby calculate the accumulated lamp time. The correction control unit 211 displays a warning message on the display unit 122 to prompt a user to perform maintenance and inspection of the UV lamp 351 when the accumulated lamp time exceeds a fixed time.

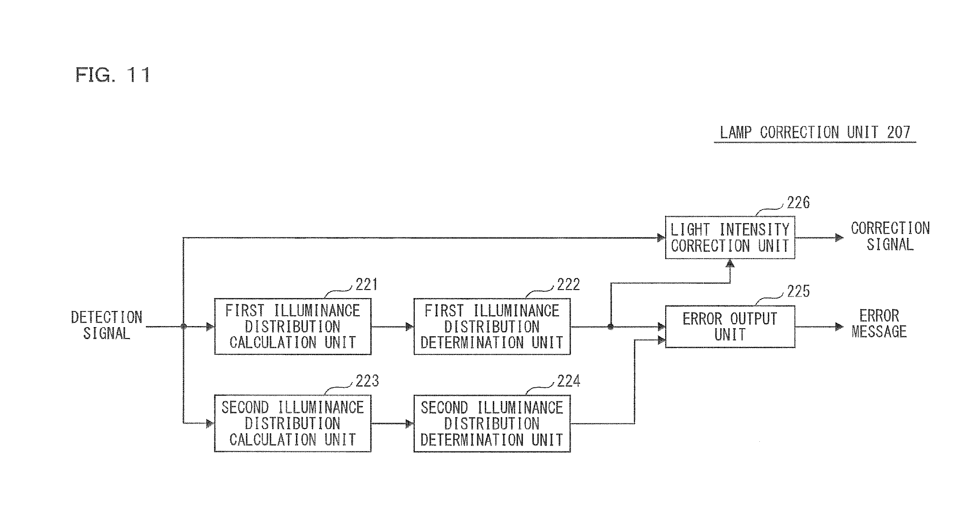

Fig. 11 is a block diagram illustrating a configuration example of the lamp correction unit 207 in Fig. 10. The lamp correction unit 207 includes a first illuminance distribution calculation unit 221, a first illuminance distribution determination unit 222, a second illuminance distribution calculation unit 223, a second illuminance distribution determination unit 224, an error output unit 225, and a light intensity correction unit 226.

The light intensity correction unit 226 generates a correction signal configured to correct the light intensity of the UV lamp 351 based on the detection signal of the illuminance sensor 60, and outputs to the lamp power source 206. More specifically, the output voltage of the lamp power source 206 is adjusted so that the illuminance detected by the illuminance sensor 60 coincides with the illuminance target.

The first illuminance distribution calculation unit 221 calculates a first illuminance distribution related to the main scanning direction in order to detect contamination or the like of the light projection surface of the UV lamp 351. The first illuminance distribution is calculated based on the illuminance detected when the UV lamp 351 passes over the illuminance sensor 60 during scanning in the main scanning direction. The first illuminance distribution exhibits a symmetrical relationship to a position in the x direction at which the UV lamp 351 is opposed to the illuminance sensor 60 when the light projection surface is not contaminated.

The first illuminance distribution determination unit 222 determines whether or not the first illuminance distribution is symmetrical, and outputs that determination result to the error output unit 225. More specifically, the position at which the UV lamp 351 is opposed to the illuminance sensor 60 in the x direction is configured as the origin, the illuminance is compared at two points in the x direction at an equal distance from the origin to thereby determine whether or not it is symmetrical depending on whether or not the illuminance error difference is less than or equal to a predetermined determination threshold Th1. A light intensity correction on the UV lamp 351 is performed by the light intensity correction unit 226 based on the determination result of the first illuminance distribution unit 222. That is to say, when the first illuminance distribution is symmetrical, a light intensity correction is performed on the UV lamp 351, and when it is not symmetrical, the light intensity correction is not performed.

The error output unit 225 performs an error output based on the determination result of the first illuminance distribution determination unit 222. More specifically, when the first illuminance distribution is not symmetrical, an error message notifying a user that the light projection surface is contaminated is displayed on the display unit 122.

The second illuminance distribution calculation unit 223 calculates a second illuminance distribution related to the sub-scanning direction in order to detect contamination on the light projection surface of the UV lamp 351. The second illuminance distribution is calculated based on the illuminance detected when the UV lamp 351 passes over the illuminance sensor 60 during scanning in the sub-scanning direction. The irradiation area of the UV lamp 351 covers the shaping material deposition band that has the maximum width that can be formed in a single main scan by the shaping material nozzles 312, 322 in relation to the sub-scanning direction. As a result, when the light projection surface is not contaminated, the second illuminance distribution can maintain an illuminance of greater than or equal to a fixed level in relation to an interval corresponding to the UV lamp 351.

The second illuminance distribution determination unit 224 determines whether or not the second illuminance distribution exceeds a predetermined determination threshold Th2 in relation to the interval corresponding to the UV lamp 351, and outputs the determination result to the error output unit 225. The error output unit 225 performs an error output in relation to the determination result of the second illuminance distribution determination unit 224. More specifically, when an interval is present in which the illuminance does not exceed the determination threshold Th2 in an interval corresponding to the UV lamp 351, an error message is displayed on the display unit 122 to notify the user that the light projection surface is contaminated.

### Output Correction of UV Lamp 351

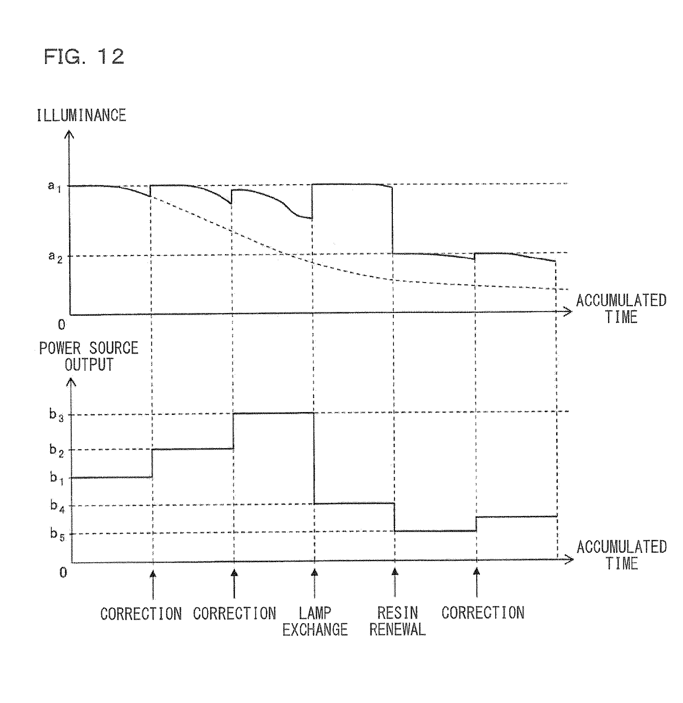

Fig. 12 illustrates an example of the lamp correction operation in the three-dimensional shaping apparatus 10 in Fig. 10, and illustrates the adjustment of the power source output and the illuminance variation due to the passage of accumulated lamp time. In the figure, the illuminance change corresponding to the accumulated lamp time of the UV lamp 351 and the light intensity correction due to the output adjustment of the lamp power source 206 for each fixed time are illustrated.

The illuminance of the irradiation light of the UV lamp 351 is gradually reduced through the passage of the accumulated lamp time due to temporal deterioration of the UV lamp 351. In the three-dimensional shaping apparatus 10, a correction process is executed upon expiry of a fixed time as an accumulated lamp time, and the light intensity correction of the UV lamp 351 is performed by adjusting the output of the lamp power source 206.

In this example, although a desired illuminance a1 is observed by driving the UV lamp 351 at a power source output b1, and the illuminance observed over the course of the accumulated lamp time gradually decreases. The illuminance a1 is restored by performing a first light intensity correction and increasing the power source output to b2.

When the accumulated lamp time is finished, the observed illuminance gradually decreases. In this context, a second light intensity correction is performed, and the power source output is increased to b3. When the power source output b3 reaches a rated output, the light intensity correction is not sufficient, and a desired illuminance a1 is not obtained. In this case, a warning message is displayed to prompt lamp exchange.

When exchanging the UV lamp 351, a third light intensity correction is performed together with lamp exchange, and the power source output is decreased to b4. Thereafter, although the accumulated lamp time has expired, the observed illuminance gradually decreases, the fourth light intensity correction is performed together with changing the type of shaping material. Although the change in the type of shaping material means that the illuminance target is a2, the desired illuminance a2 is observed by decreasing the power source output to b5.

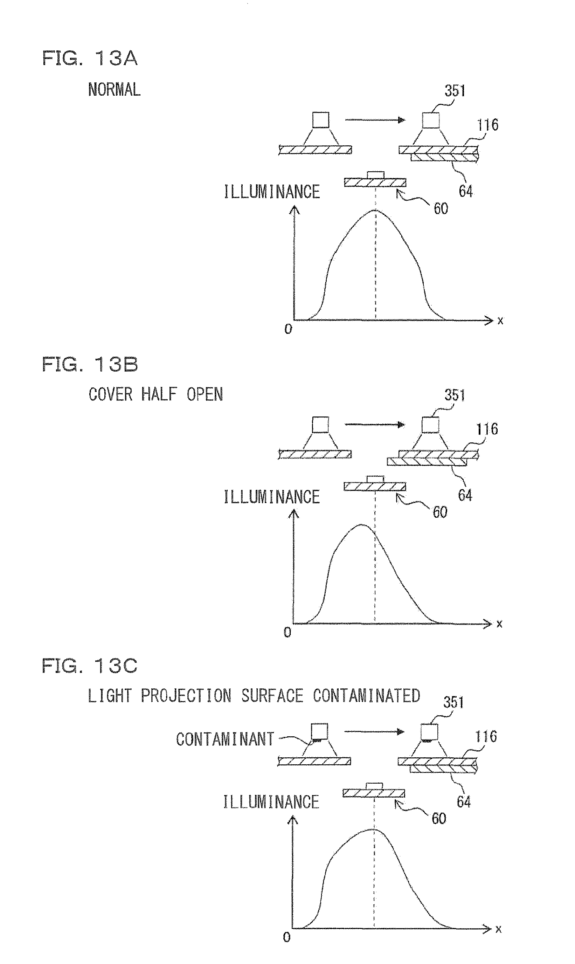

Fig. 13 schematically illustrates an example of the lamp correction operation in the three-dimensional shaping apparatus 10, and illustrates an illuminance distribution measured during main scanning in the x direction. In the figure, (a) denotes a normal configuration, (b) denotes a configuration in which the contamination prevention cover 64 of the illuminance sensor 60 is half open, and (c) denotes a configuration in which the light projection surface of the UV lamp 351 is contaminated.

An illuminance distribution related to the main scanning direction is calculated based on the illuminance detected when the UV lamp 351 passes over the illuminance sensor 60, and when the illuminance is normal, it exhibits a symmetrical configuration in relation to the position in x direction at which the UV lamp 351 and the illuminance sensor 60 are opposed.

In contrast, when the contamination prevention cover 64 is half opened, the illuminance peak position deviates to the left, and the illuminance distribution does not exhibit bilateral symmetry. Furthermore, even when contamination such as shaping material or particulate matter has adhered to the light projection surface, the illuminance distribution does not exhibit bilateral symmetry due to the fact that a partial illuminance reduction results in relation to the position of contamination. Therefore, an abnormality in the contamination prevention cover 64 or contamination of the light projection surface can be detected by determining whether or not the illuminance distribution is symmetrical in relation to the main scanning direction.

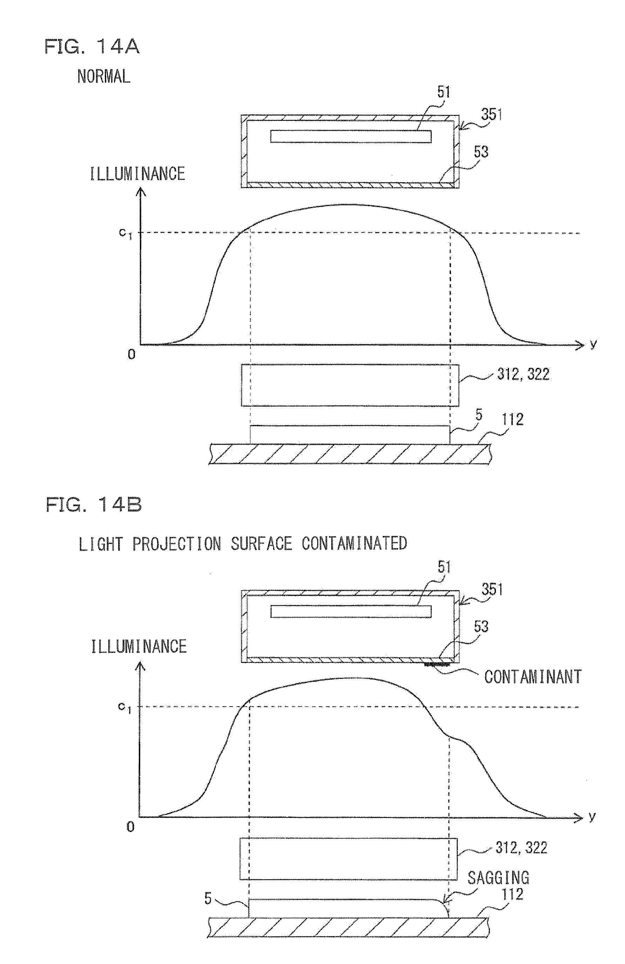

Fig. 14 schematically illustrates an example of the lamp correction operation in the three-dimensional shaping apparatus 10, and illustrates an illuminance distribution measured during main scanning in the y direction. In the figure, (a) denotes a normal configuration, and (b) denotes a configuration in which light projection surface of the UV lamp 351 is contaminated.

An illuminance distribution related to the sub-scanning direction is calculated based on the illuminance detected when the UV lamp 351 passes over the illuminance sensor 60. The width of the irradiation area of the UV lamp 351 is greater than the shaping material deposition band 5 that has the maximum width that can be formed in a single pass, and covers the shaping material deposition band 5 in the sub-scanning direction. As a result, illuminance of at least a fixed level can be maintained in relation to the shaping material deposition band 5 if the light projection surface of the UV lamp 351 is not contaminated.

In contrast, an illuminance reduction occurs in an interval corresponding to the contamination if contamination such as particulate matter or shaping material has adhered to the cover glass 53 of the UV lamp 351. Sagging of the shaping material deposition band 5 is caused due to the effect of an insufficient light amount in an interval in which the illuminance is reduced. In this context, contamination of the light projection surface can be detected by determining whether or not an interval is present in the shaping material deposition band 5 in which the illuminance is less than a fixed value c1.

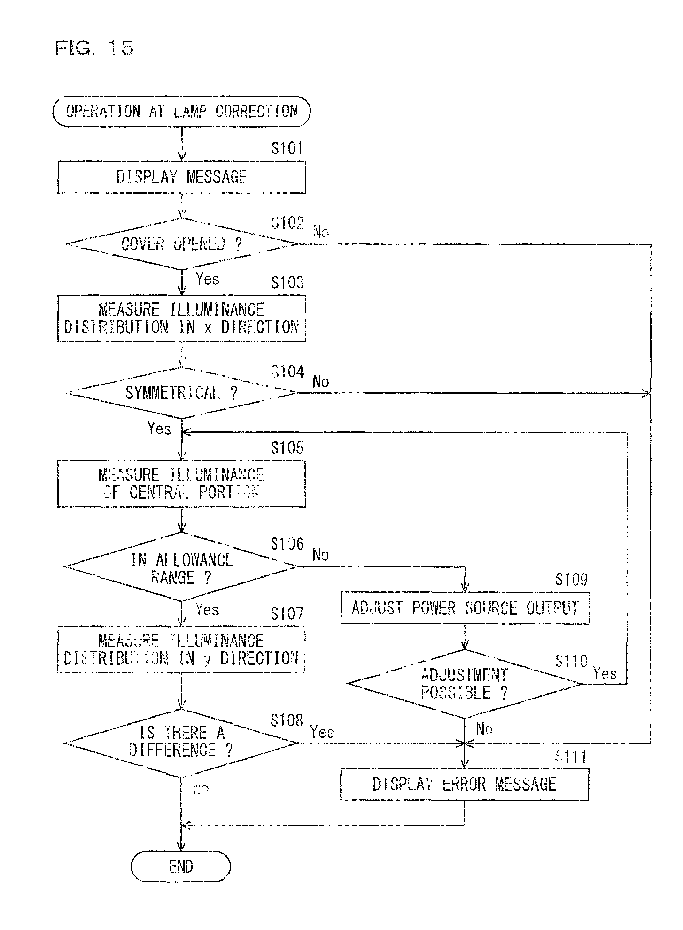

Step S101 to S111 in Fig. 15 illustrate a flowchart of an example of the operation when correcting the lamp in the three-dimensional shaping apparatus 10 in Fig. 10. The correction control unit 211 displays a warning message configured to prompt a user firstly to open the contamination prevention cover 64 when output correction is commanded to the lamp correction unit 297 according to the maintenance schedule (step S101).

Next, the correction control unit 211 completes processing by display of an error message when the contamination prevention cover 64 is not opened within a fixed time (step S102, S111). On the other hand, when the correction control unit 211 detects that the contamination prevention cover 64 has been opened, it commands output correction to the lamp correction unit 207 and measures the illuminance distribution in relation to the x direction by use of the lamp correction unit 207 (step S102, S103).

Next, the lamp correction unit 207 determines that a contaminant has adhered to the light projection surface or that there is an abnormality in the contamination prevention cover 64 when the illuminance distribution in relation to the x direction is not symmetrical, displays an error message, and completes processing (step S104, C111)

When the illuminance distribution in the x direction is symmetrical, the illuminance is measured at a position in the x direction at which the UV lamp 351 and the illuminance sensor 60 are opposed (step S104, S105). The lamp correction unit 207 compares the detected illuminance with the illuminance target, and when the illuminance error is less than or equal to a predetermined determination threshold Th3, it determines that the illuminance is within an allowable range, and does not perform light intensity correction (step S106).

On the other hand, when the illuminance error exceeds the determination threshold Th3, a light intensity correction is performed by adjusting the output of the lamp power source 206 (step S109), and the sequence of processes in S105 is repeated. At that time, the correction control unit 211 displays an error message when the output of the lamp power source 206 reaches an upper limit as a result of the light intensity correction (step S110, S111).

Next, lamp correction unit 207 measures the illuminance distribution relative to the y direction (step S107). When an abnormality in the resulting illuminance distribution in the y direction is detected, it is determined that the light projection surface is contaminated, and an error message is displayed (step S108, S111).

According to the present embodiment, since the light intensity correction on the UV lamp 351 is performed based on the illuminance detected by the illuminance sensor 60, the effect of individual differences or deterioration of the UV lamp 351 can be inhibited, and light can be irradiated at an illuminance that is suitable to the shaping material. In particular, since the illuminance sensor 60 is provided, in comparison to a conventional shaping apparatus that measures the illuminance using an illuminance meter, the position of the illuminance meter may be adjusted to thereby avoid problems in relation to the adjustment of the output of the light source by input of the measurement value, and therefore the output adjustment for the UV lamp 351 can be simplified.

Since the light intensity correction is performed based on the determination result of the first illuminance distribution determination unit 222, it is possible to prevent correction of the light intensity of the UV lamp 351 even though an illuminance change is caused by the effect of contamination on the light projection surface.

In the present embodiment, although an example has been described in which a light intensity correction on the UV lamp 351 is performed based on the illuminance (instantaneous value) detected by the illuminance sensor 60, the present invention is not limited to a light intensity correction for the UV lamp 351. For example, an accumulated light amount calculation device may be provided that sums the illuminance detected when the UV lamp 351 passes over the illuminance sensor 60 during scanning in the main scanning direction to thereby calculate an accumulated light amount. The light intensity correction unit 226 can thereby correct the light intensity of the UV lamp 351 based on the accumulated light amount.

The accumulated light amount when the UV lamp 351 passes over the illuminance sensor 60 during scanning in the main scanning direction changes in response to the degree of contamination of the light projection surface of the UV lamp 351 or the scanning speed in the main scan. Furthermore, the degree of curing of the shaping material layer is determined in response to this type of accumulated light amount. As a result, by calculating the accumulated light amount and correcting the light intensity of the UV lamp 351 based on the accumulated light amount, the shaping material layer can be suitably cured notwithstanding a change in the scan speed in comparison to a configuration in which the light intensity correction is performed with reference to a peak value or instantaneous value for the illuminance.

In the present embodiment, although an example has been described in which the light receiving hole 115 for the illuminance sensor is provided at a position which can be opposed to the UV lamp 351 during scanning in the x direction and the y direction, the present invention is not limited in relation to the disposition of the light receiving hole 115. For example, the present invention includes a configuration in which the light receiving hole 115 is disposed at a peripheral edge portion of the irradiation area when the UV lamp 351 is disposed on the end portion of the scan in the x direction or the y direction.

In the present embodiment, although an example has been described in which the light receiving element of the illuminance sensor 60 is disposed immediately below the light receiving hole 115, the present invention is not limited to this configuration of the illuminance sensor 60. For example, the illuminance sensor 60 may include a configuration in which a mirror is disposed immediately below the light receiving hole 115, and light that is reflected by the mirror may be received by the light receiving element such as a PD, or the like.

In the present embodiment, although an example has been described in which the z-displacement unit 40 that includes the conveyance plate 41 and the plate mounting base 42, the present invention is not limited to a moveable configuration in relation to the unit including the conveyance plate 41 and the plate mounting base 42, and a fixed configuration may be employed. In other words, the present invention includes a configuration in which the shaping material layer is laminated and formed on the conveyance plate 41 by movement of the head unit 111 in a vertical direction.

### Reference Numerals

- 100: SHAPING SYSTEM
- 10: THREE DIMENSIONAL SHAPING APPARATUS
- 11: UPPER DOOR
- 110: OPERATION SPACE
- 111: HEAD UNIT
- 112: SHAPING STAGE
- 113: X-SCANNING ENGAGEMENT GROOVE
- 114: PURGE TRAY
- 115: ILLUMINANCE SENSOR LIGHT RECEIVING HOLE
- 116: TOP PLATE OF OPERATION BENCH
- 12: OPERATION DISPLAY UNIT
- 121: OPERATION UNIT
- 122: DISPLAY UNIT
- 13: FRONT SURFACE DOOR
- 130: CARTRIDGE CONTAINING PORTION
- 13M: MODEL MATERIAL CARTRIDGE
- 13S: SUPPORTING MATERIAL CARTRIDGE
- 13H: WASTE LIQUID TANK
- 20: SHAPING ORDERING PARTY TERMINAL
- 31: SUPPORTING MATERIAL NOZZLE UNIT
- 311: SUPPORTING MATERIAL RESERVE TANK
- 312: SUPPORTING MATERIAL SHAPING MATERIAL NOZZLE
- 32: MODEL MATERIAL NOZZLE UNIT
- 321: MODEL MATERIAL RESERVE TANK
- 322: MODEL MATERIAL SHAPING MATERIAL NOZZLE
- 33: Y-SCANNING HOLDER UNIT
- 34: ROLLER UNIT
- 341: FILM WIDTH ADJUSTMENT ROLLER
- 35: LAMP UNIT
- 351: UVLAMP
- 40: Z DISPLACEMENT UNIT
- 41: CONVEYANCE PLATE
- 42: PLATE MOUNTING BASE
- 43: Z-DRIVING APPARATUS
- 51: LINEAR LIGHT SOURCE
- 52: HOUSING
- 53: COLOR GLASS
- 54: REFLECTING MIRROR
- 60: ILLUMINANCE SENSOR
- 61: PD
- 62: BASE PLATE
- 63: HEAT SHIELD FILTER
- 64: CONTAMINATION PREVENTION COVER
- 65: HOUSING
- 201: SHAPING INFORMATION STORAGE UNIT
- 202: SHAPING CONTROL UNIT
- 203: XY DRIVING UNIT
- 204: Z DRIVING UNIT
- 205: ILLUMINANCE TARGET GENERATING UNIT
- 206: LAMP POWER SOURCE
- 207: LAMP CORRECTION UNIT
- 208: COVER OPENING AND CLOSING SENSOR
- 209: ACCUMULATED LAMP TIME CALCULATION UNIT
- 210: MAINTENANCE SCHEDULE STORAGE UNIT
- 211: CORRECTION CONTROL UNIT
- 221: FIRST ILLUMINANCE DISTRIBUTION CALCULATION UNIT
- 222: FIRST ILLUMINANCE DISTRIBUTION DETERMINATION UNIT
- 223: SECOND ILLUMINANCE DISTRIBUTION CALCULATION UNIT
- 224: SECOND ILLUMINANCE DISTRIBUTION DETERMINATION UNIT
- 225: ERROR OUTPUT UNIT
- 226: LIGHT INTENSITY CORRECTION UNIT
- 2: EJECTION PORT
- 3: DROPLET
- 5: SHAPING MATERIAL DEPOSITION BAND
- A1: SHAPING AREA
- A2: MOVEABLE AREA OF HEAD UNIT
- A3: RECOMMENDED AREA
- AL: LAMP MOVEABLE AREA
- AN: NOZZLE MOVEABLE AREA
- M: MODEL MATERIAL
- S: SUPPORTING MATERIAL
- SS: LOWER BASE LAYER

## Claims

1. A three-dimensional shaping apparatus having:
a shaping material nozzle having two or more ejection ports aligned in a substantially linear configuration and configured to eject photocurable shaping material onto the shaping stage;
a light source configured to illuminate light onto the shaping material ejected onto the shaping stage and cure the shaping material;
a moveable unit configured to retain the light source and the shaping material nozzle;
a scanning device configured to scan the moveable unit parallel to the shaping stage in a direction that is orthogonal to the direction of alignment of the ejection ports;
a vertical driving device configured to move the positions of the moveable unit and the shaping stage with respect to each other in the height direction; and
a control device configured to control the scanning device, the vertical driving device, the ejection of the shaping material nozzle, and the light source; wherein
the three-dimensional shaping apparatus is configured to perform successive lamination of shaping material layers formed from shaping material that is ejected and cured on the shaping stage; comprises:
an illuminance sensor provided at a position enabling receipt of light generated by the light source; and
a light intensity correction device configured to correct the light intensity of the light source based on the illuminance detected by the illuminance sensor.

2. The three-dimensional shaping apparatus according to claim 1 comprising:
a light receiving aperture in a moveable area of the light source outside the moveable area of the shaping material nozzles; and wherein
the illuminance sensor is configured to receive light generated by the light source through the light receiving aperture.

3. The three-dimensional shaping apparatus according to claim 2 or claim 3 wherein:
the shaping material nozzle and the light source are disposed at different positions along the scanning direction in the moveable unit; and
the light receiving aperture is disposed at a position enabling opposition with the light source during scanning outside of the moveable area of the shaping material nozzle.

4. The three-dimensional shaping apparatus according to claim 2 wherein:
the scanning device configures the main scanning direction as the direction that is orthogonal to the alignment direction of the ejection ports, configures the sub-scanning direction as the direction that is orthogonal to the main scanning direction, and executes two-dimensional scanning of the moveable unit;
the shaping material nozzle and the light source are disposed at different positions along the main scanning direction in the moveable unit; and
the light receiving aperture is disposed at a position enabling opposition to the light source during scanning in the sub-scanning direction outside of the moveable area of the shaping material nozzle.

5. The three-dimensional shaping apparatus according to claim 4 further comprising:
an integrated light amount calculation device configured to integrate the illuminance detected when the light source during scanning in the main scanning direction passes over the light receiving aperture and to calculate the integrated light amount; and
the light correction device corrects the light intensity of the light source based on the integrated light amount.

6. The three-dimensional shaping apparatus according to claim 4 or claim 5 further comprising:
a first illuminance distribution calculation device configured to calculate a first illuminance distribution with reference to the main scanning direction based on the illuminance detected when the light source during scanning in the main scanning direction passes over the light receiving aperture;
a first illuminance distribution determination device configured to determine whether or not the first illuminance distribution is symmetrical; and
an error output device configured to perform error output based on the determination result of the first illuminance distribution determination device.

7. The three-dimensional shaping apparatus according to claim 6 wherein:
the light intensity correction device corrects the light intensity of the light source based on the determination result of the first illuminance distribution determination device.

8. The three-dimensional shaping apparatus according to claim 4 or claim 5 further comprising:
a second illuminance distribution calculation device configured to calculate a second illuminance distribution with reference to the sub-scanning direction based on the illuminance detected when the light source during scanning in the sub-scanning direction passes over the light receiving aperture;
a second illuminance distribution determination device configured to determine whether or not the second illuminance distribution exceeds a determination threshold in relation to an interval corresponding to the light source; and
an error output device configured to perform error output based on the determination result of the second illuminance distribution determination device.

9. The three-dimensional shaping apparatus according to any one of claim 1 to claim 8 wherein:
an illuminance target generating device configured to generate an illuminance target based on the scanning speed, the thickness of the shaping material layer or the type of shaping material; and
a power source for light source configured to supply power to the light source based on the illuminance target, and wherein:
the light intensity correction device is configured to correct the light intensity of the light source based on the adjustment of the output of the power source for light source in which the illuminance detected by the illuminance sensor coincides with the illuminance target.
